(19) Europäisches Patentamt
European Patent Office
Office européen des brevets

(11) Veröffentlichungsnummer: **0 348 620 B1**

(12) **EUROPÄISCHE PATENTSCHRIFT**

(45) Veröffentlichungstag der Patentschrift: **31.08.94**

(51) Int. Cl.5: **C07F 7/18**

(21) Anmeldenummer: **89106989.0**

(22) Anmeldetag: **19.04.89**

Die Akte enthält technische Angaben, die nach dem Eingang der Anmeldung eingereicht wurden und die nicht in dieser Patentschrift enthalten sind.

(54) **Verfahren zur Herstellung ein- oder mehrfach substituierter organyloxysilylfunktioneller Thioharnstoffe und diese Verbindungen.**

(30) Priorität: **25.06.88 DE 3821465**

(43) Veröffentlichungstag der Anmeldung:
**03.01.90 Patentblatt 90/01**

(45) Bekanntmachung des Hinweises auf die Patenterteilung:
**31.08.94 Patentblatt 94/35**

(84) Benannte Vertragsstaaten:
**AT BE CH DE ES FR GB IT LI LU NL**

(56) Entgegenhaltungen:
**EP-A- 0 280 946**
**WO-A-86/06073**
**DE-A- 2 000 224**
**US-A- 2 938 046**
**US-A- 3 646 089**

**JOURNAL OF GENERAL CHEMISTRY, Band 54, Nr. 5, Teil 2, Mai 1984, Seiten 983-987;M.G. VORONKOV et al.: "N,N'-Bis(3-silatranylpropyl)-urea and -Thiourea"**

**CHEMICAL ABSTRACTS, Band 79, 1973, Seite 460, Zusammenfassung Nr. 66463r,Columbus, Ohio, US; A. BAIGOZHIN: "Reaction of 3-aminopropyltriethoxysilanewith allyl and phenyl isothiocyanates", & ZH. OBSHCH. KHIM. 1973,43(6), 1408**

(73) Patentinhaber: **Degussa Aktiengesellschaft**
**Weissfrauenstrasse 9**
**D-60311 Frankturt (DE)**

(72) Erfinder: **Deschler, Ulrich, Dr.**
**Birkenweg 1**
**D-6450 Hanau 9 (DE)**
Erfinder: **Panster, Peter, Dr.**
**Im Lochseif 8**
**D-6458 Rodenbach (DE)**
Erfinder: **Kleinschmit, Peter, Dr.**
**Wildaustrasse 19**
**D-6450 Hanau 9 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung von N - bzw. N' ein- oder mehrfach substituierten, organyloxysilylfunktionellen Thioharnstoffen und die so herstellbare Verbindungen.

Von A. Baigozhin, Zh. Obshch. Khim.43 (1973), 1408 (C.A. 79: 66463r) ist die Umsetzung von Aminopropyltrialkoxysilanen mit Alkylisothiocyanaten bekannt, die zu N, N'-disubstituierten Thioharnstoffen der Formel

$(RO)_3$ Si-$(CH_2)_3$ - NH - CS - NH - R' führt, mit R = Ethyl und R' = Phenyl, Allyl.

Diese Verbindungen werden zur Modifizierung von siliciumhaltigen Polymeren und Beschichtungen eingesetzt.

Eine symmetrische N, N'-substituierte Verbindung wird von M.G. Voronkov et al. beschrieben in Zh. Obshch. Khim.54 (1984),1098 (C.A. 101: 192031j). Man erhält sie durch Reaktion von Aminopropyltrialkoxysilanen mit Thioharnstoff

$((RO)_3$ Si - $(CH_2)_3$ - NH - CS - NH - $(CH_2)_3$ - Si $(OR)_3)$.

Aufgabe der Erfindung ist ein neues Verfahren zur Herstellung von substituierten organyloxysilylfunktionellen Thioharnstoffen das unter Verwendung von zugänglichen Ausgangsverbindungen mit guten Ausbeuten zu den gewünschten Verbindungen führt, und neue Thioharnstoffe.

Gegenstand der Erfindung ist ein Verfahren zur Herstellung von N bzw. N' ein- oder mehrfach substituierten organyloxysilylfunktionellen Thioharnstoffen,
dadurch gekennzeichnet,
daß man

a) ein Aminoalkylsilan der allgemeinen Formel (I)

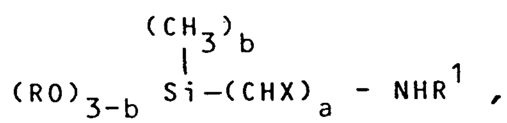

in der bedeuten

b: 0, 1 oder 2, bevorzugt 0,
R: Alkyl mit 1 bis 6 C-Atomen,
bevorzugt Methyl oder Ethyl,
Cycloalkyl mit 5 bis 7 C-Atomen, Aryl, bevorzugt Phenyl
X: Wasserstoff, wenn a = 1, 3, 4, 5 oder 6, bevorzugt a = 3,
$R^1$ : Wasserstoff,

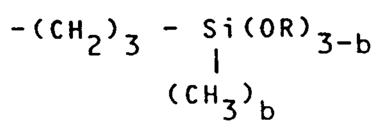

in einem organischen Lösungsmittel mit Kohlenstoffdisulfid in Gegenwart eines tertiären Amins (A) oder Alkalialkoholats (MOR) umsetzt,

b) das dabei gebildete Dithiocarbarnat der allgemeinen Formel (II)

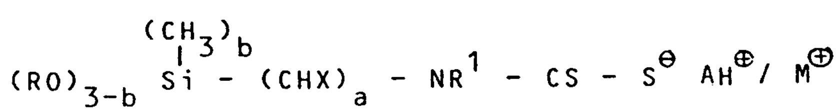

isoliert und mit mindestens der äquimolaren Menge eines Amins der allgemeinen Formel (III)

$HN'R^2R^3$ versetzt,

in der bedeuten

$R^2$, $R^3$: unabhängig voneinander Wasserstoff, Alkyl mit 1 bis 8 C-Atomen Alkenyl mit 2 bis 8 C-Atomen Aryl, insbesondere Phenyl, Naphthyl, Aralkyl, insbesondere Benzyl, Phenethyl,

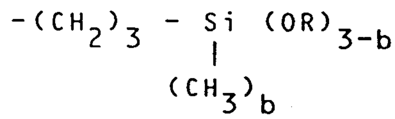

$R^2$ und $R^3$ aber nicht gleichzeitig Wasserstoff sein können,

dieses Gemisch erhitzt, bis die Reaktion abgeschlossen ist, und das entstandene Produkt der allgemeinen Formel (IV)

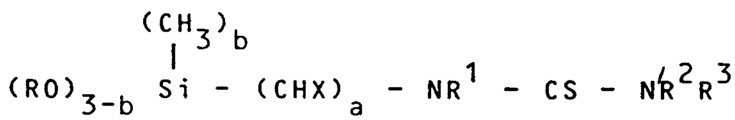

anschließend mit an sich bekannten Methoden isoliert. Bevorzugt sind Verbindungen, in denen $-(CHX)_a-$ für

$$-(CH_2)_3-$$

steht.

Die Herstellung der gewünschten Verbindungen erfolgt aus Aminoalkylsilanen, $CS_2$ und primären oder sekundären Aminen nach folgendem Grundschema über die isolierbaren Dithiocarbamat-Zwischenstufen:

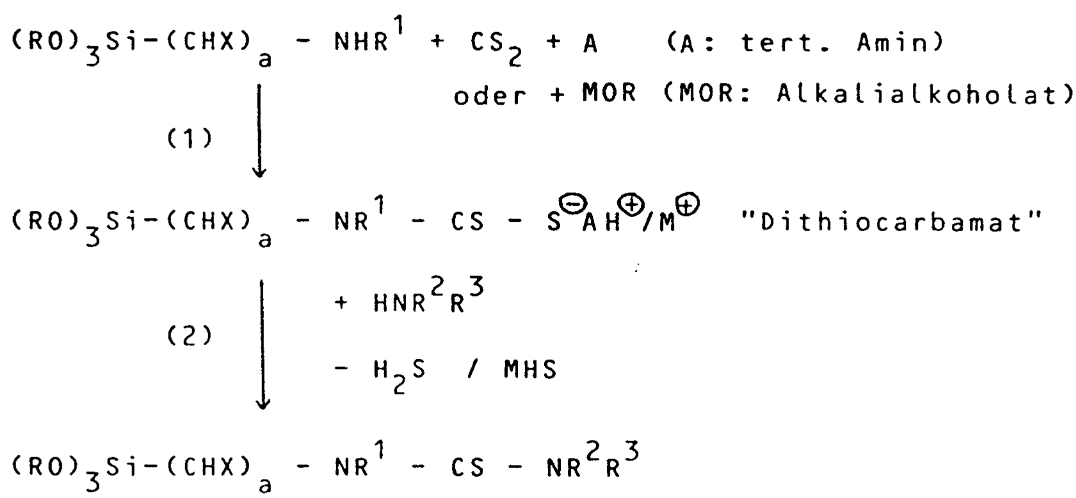


Die Reaktion gemäß Gleichung (1) führt man vorzugsweise in einem unpolaren, aprotischen Lösungsmittel durch, wenn man tert. Amine als Protonenakzeptor einsetzt. Als Lösungsmittel besonders geeignet sind dann (halogenierte) Kohlenwasserstoffe oder (cyclische) Ether wie etwa n-Pentan oder Tetrahydrofuran sowie deren Mischungen.

Setzt man ein Alkalialkoholat als Protonenakzeptor ein, so sind darüber hinaus auch polare, aprotische Lösungsmittel wie z. B. Dimethylformamid, aber auch bestimmte polare, protische Lösungsmittel wie z. B.

Alkohole geeignet. In letzterem Falle ist es besonders vorteilhaft, das Alkalialkoholat direkt durch die Reaktion von Alkalimetall, insbesondere Natrium oder Kalium mit einem Alkohol, insbesondere Methanol oder Ethanol, nach an sich bekannten Verfahren herzustellen und diese Reaktionslösung direkt für die Umsetzung zum Dithiocarbamat zu verwenden.

Als wesentliche Voraussetzung für die Eignung als Lösungsmittel gilt, daß es das Aminosilan einerseits lösen muß, während andererseits das gebildete Dithiocarbamat möglichst quantitativ ausgefällt werden soll und daß es sich ansonsten als inert erweist. Die Reaktanden Aminopropylsilan, Kohlenstoffdisulfid und tertiäres Amin bzw. Alkalialkolat werden in einem Molverhältnis von etwa 1 : 1 : 1 eingesetzt, ohne daß damit beispielsweise eine bis zu 10 %ige Abweichung von den stöchiometrisch geforderten Mengen ausgeschlossen würde.

Entsprechende Molverhältnisse gelten auch für die Reaktanden Dithiocarbamat und Amin gemäß Gleichung (2).

Amine, in denen $R^2$ und/oder $R^3$ die Bedeutung

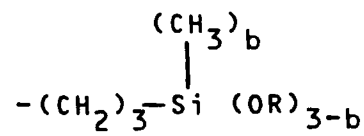

besitzt, sind gemäß DE-OS 31 20 214 bzw. J.L. Speier et al., J. Org. Chem. 36 (1971), 3120 ff bekannt. Als tertiäre Amine werden bevorzugt Triethylamin oder Pyridin eingesetzt.

Die Reaktion gemäß Gleichung (1) wird vorzugsweise bei Temperaturen unterhalb des Siedepunktes des Kohlenstoffdisulfids, insbesondere bei Temperaturen von 0 bis 46 °C durchgeführt. Vorteilhafterweise gibt man die siliciumorganische Verbindung dem u. U. im stöchiometrischen Überschuß vorgelegten Kohlenstoffdisulfid zu. Das ausfallende "Dithiocarbamat" wird abfiltriert und unter Vakuum von den Lösungsmittelresten befreit.

Dithiocarbamate, wie man sie über die Reaktion gemäß Gleichung (1) erhält, sind teilweise aus der Literatur bekannt. Nach dem Stand der Technik werden sie jedoch mit Acrylnitril umgesetzt (DE-OS 2 000 224) oder durch Hydrolyse in Polysiloxanverbindung umgewandelt (US-PS 2 938 046).

Erfindungsgemäß werden die als hellgelbe Kristallpulver anfallenden "Dithiocarbamate" zu Thioharnstoffen umgesetzt. Gemäß Reaktionsschritt (2) werden primäre oder sekundäre Amine bevorzugt in äquimolaren Mischungen mit den Organosiliciumverbindungen im allgemeinen ohne Lösungsmittelzusatz unter Rühren auf Temperaturen von 80 bis 140 °C erhitzt.

In einer vorteilhaften Ausführungsform bei Verwendung eines Ammonium-Dithiocarbamats zieht man den sich bildenden Schwefelwasserstoff und das sich abspaltende tertiäre Amin unter Vakuum ab. Die dabei in hohen Ausbeuten anfallenden Thioharnstoffe brauchen nicht weiter gereinigt zu werden.

Setzt man hingegen Alkali-Dithiocarbamate ein, so entsteht kein Schwefelwasserstoff, sondern es bildet sich das entsprechende Alkalihydrogensulfid. Dies wird von dem gewünschten Produkt durch Ausfüllung mit einem geeigneten Lösungsmittel z. B. Aceton abgetrennt.

Gegenstand der Erfindung sind ebenfalls N, N, N′ bzw. N, N′, N′ und N, N, N′, N′-substituierte Thioharnstoffe der allgemeinen Formel (III)

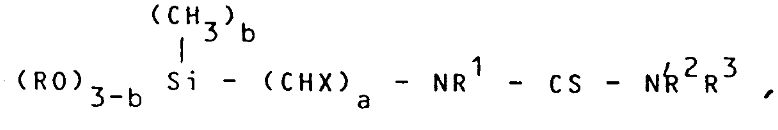

in der a, b, X, R, $R^1$ und $R^3$ die obengenannten Bedeutungen haben, mit Ausnahme der Fälle, in denen $R^4$ und $R^2$ oder $R^3$ Wasserstoff entsprechen.

Diese Verbindungen werden vorteilhaft wegen ihrer vulkanisationsbeschleunigenden Wirkung in Halogenkautschukmischungen verwendet.

Herstellungsbeispiele:

I. 3-Trialkoxysilylpropyldithiocarbamate (Beispiele 1-4):

Beispiel 1 : Triethylammonium(3-trimethoxysilylpropyl)-dithiocarbamat

$$(CH_3O)_3Si-(CH_2)_3-NH-CS-S^{\ominus}\ HN(C_2H_5)_3^{\oplus},\ \underline{1}:$$

789 g 3-Aminopropyltrimethoxysilan (4,4 Mol) und 465,5 g Triethylamin (4,6 Mol, Übershuß) werden in 1200 ml THF bei Raumtemperatur vorgelegt und innerhalb von 6 h tropfenweise unter Eiskühlung mit 351,5 g Schwefelkohlenstoff (4,6 Mol, Überschuß) versetzt. Der ausgefallene, hellgelbe Wiederschlag wird abfiltriert und im Vakuum von Lösungsmittelresten befreit. Erhalten werden 1337 g eines gelben Pulvers (entspr. 85,2 % d. Th.).

| $C_{13}H_{32}N_2O_3S_2Si$ (356, 624): | | | | |
|---|---|---|---|---|
| | C (%) | H (%) | N (%) | S (%) |
| ber.: | 43,78 | 9,04 | 7,86 | 17,98 |
| gef.: | 43,3 | 9,3 | 7,7 | 18,5 |

Beispiel 2: Triethylammonium (3-triethoxysilylpropyl)dithiocarbamat

$(C_2H_5O)_3Si-(CH_2)_3-NH-CS-S^{\ominus}\ HN(C_2H_5)_3^{\oplus}$, $\underline{2}$:

637,6 g Triethylamin (6,3 Mol, Überschuß) und 502,3 g Schwefelkohlenstoff (6,6 Mol, Überschuß) werden in 1,5 l THF vorgelegt und innerhalb von 4 h unter Eiskühlung mit 1328,3 g 3-Aminopropyltriethoxysilan (6 Mol) versetzt. Gegen Ende der Silanzugabe fällt das gewünschte Silylpropyldithiocarbamat bereits aus.

Zur Vervollständigung der Ausfällung wird mit 1,5 l Petrolether versetzt und filtriert. Nach Abziehen flüchtiger Bestandteile werden 2131,4 g eines gelben Pulvers erhalten (entspr. 89,1 % d. Th.).

Beispiel 3: Natrium (3-triethoxysilylpropyl)dithiocarbamat

$(C_2H_5O)_3Si-(CH_2)_3-NH-CS-S^{\ominus}\ Na^{\oplus}$, $\underline{3}$:

In eine durch Eintrag von 23 g Natrium (1 Mol) in 500 ml Ethanol erhaltene Natriumethylatlösung werden gleichzeitig bei Raumtemperatur 221,4 g 3-Aminopropyltriethoxysilan (1 Mol) und 83,7 g Schwefelkohlenstoff (1,1 Mol, Überschuß) innerhalb 1 h zugetropft. Die Temperatur der Reaktionslösung steigt dabei von selbst auf 45 °C an. Die so erhaltene Produktlösung wird am Rotavapor vom Ethanol befreit, wodurch 312,7 g eines gelben Feststoffes (entspr. 97,9 % d. Th.) erhalten werden. Die im $^1$H-NMR-Spektrum beobachteten Signallagen für die Trimethylengruppe stimmen mit denen für das nach Beispiel 2 hergestellte Ammoniumdithiocarbamat überein, wodurch die Identität der natriumanalogen Verbindung gesichert ist.

Beispiel 4: Natrium (bis (3-triethoxysilylpropyl))dithiocarbamat

$((C_2H_5O)_3Si-(CH_2)_3)_2\ N-CS-S^{\ominus}\ Na^{\oplus}$, $\underline{4}$:

In eine durch Eintrag von 11,5 g Natrium (0,5 Mol) in 250 ml Ethanol erhaltene Natriumethylatlösung wird bei Raumtemperatur eine Mischung aus 212,9 g Bis(3-triethoxysilylpropyl)amin (0,5 Mol), 41,9 g Schwefelkohlenstoff (0,55 Mol, Überschuß) und 150 ml Ethanol innerhalb von 1 h zugetropft, wobei die Temperatur der Reaktionsmischung mit Hilfe eines Wasserbades bei ca. 30 °C gehalten wird. Nach Abziehen des Lösungsmittels im Vakuum werden 261 g einer hochviskosen, gelben Flüssigkeit erhalten entsprechend 99,7 % d. Th.

| $C_{19}H_{42}O_6NNaS_2Si_2$ (523,836): | | | | |
|---|---|---|---|---|
| | C (%) | H (%) | N (%) | S (%) |
| ber.: | 43,57 | 8,08 | 2,67 | 12,24 |
| gef.: | 43,4 | 8,3 | 2,4 | 12,5 |

II. N-(3-Trialkoxysilylpropyl)-N'-alkyl-thioharnstoffe (Beispiele 5-9):

Allgemeine Herstellungsvorschriften: Äquimolare Mengen der Ammoniumdithiocarbamate 1, 2 und eines primären Alkylamins-bei Aminen mit Siedepunkten von unter 100 °C kann mit Vorteil auch ein Aminüberschuß eingesetzt werden - werden in einem Kolben mit Destillationsbrücke gemischt und unter Rühren allmählich erwärmt. Ab einer Sumpftemperatur von 80 °Cbeginnt Triethylamin überzudestillieren. Gleichzeitig wird $H_2S$-Entwicklung beobachtet. Bei einer Sumpftemperatur von 120 °C wird kein Destillat mehr erhalten. Zur vollständigen Entfernung flüchtiger Bestandteile wird schließlich noch Wasserstrahlvakuum angelegt. Die so erhaltenen Rohprodukte sind in der Regel zwar gelblich oder orange verfärbt, elementaranalytisch und $^1$H-NMR-spektroskopisch jedoch rein, so daß auf eine weitere Reinigung verzichtet werden kann.

Beispiel 5: N,N'-Bis(3-triethoxysilylpropyl)thioharnstoff

$(C_2H_5O)_3Si-(CH_2)_3-NH-CS-NH-(CH_2)_3-Si(OC_2H_5)_3$ 5:

Herstellung aus 797,4 g 2 (2 Mol) und 442,7 g 3-Aminopropyltriethoxysilan (2 Mol); Ausbeute: 948,7 g entsprechend 97,8 % d. Th., gelborangefarbene Flüssigkeit.

| $C_{19}H_{44}N_2O_6SSi_2$ (484, 804): | | | | |
|---|---|---|---|---|
| | C (%) | H (%) | N (%) | S (%) |
| ber.: | 47,07 | 9,15 | 5,78 | 6,61 |
| gef.: | 46,9 | 8,9 | 5,6 | 7,0 |

Das $^1$H-NMR von 5 ist in Abbildung 1 wiedergegeben.

Beispiel 6: N-(3-Triethoxysilylpropyl)-N'-propylthioharnstoff

$(C_2H_5O)_3Si-(CH_2)_3-NH-CS-NH-C_3H_7$, 6:

Herstellung aus 188,4 g 2 (0,47 Mol) und 55,6 g n-Propylamin (0,94 Mol, Überschuß).
Ausbeute: 150,3 g entsprechend 99,2 % d. Th.; gelbe, viskose Flüssigkeit.

| $C_{13}H_{30}N_2O_3SSi$ (322, 544): | | | | |
|---|---|---|---|---|
| | C (%) | H (%) | N (%) | S (%) |
| ber.: | 48,41 | 9,38 | 8,69 | 9,94 |
| gef.: | 48,6 | 9,7 | 8,0 | 9,9 |

Beispiel 7: N-(3-Trimethoxysilylpropyl)-N'-butylthioharnstoff

$(CH_3O)_3Si-(CH_2)_3-NH-CS-NH-C_4H_9$, 7:

Herstellung aus 44,6 g 1 (125 mMol) und 45,7 g n-Butylamin 625 mMol, Überschuß).
Ausbeute: 36,2 g entsprechend 98,3 g d. Th.; gelbe, hochviskose Flüssigkeit.

| $C_{11}H_{26}N_2O_3SSi$ (294, 490): | | | | |
|---|---|---|---|---|
| | C (%) | H (%) | N (%) | S (%) |
| ber.: | 44,86 | 8,90 | 9,51 | 10,89 |
| gef.: | 43,9 | 9,6 | 10,1 | - |

Beispiel 8: N-(3-Triethoxysilylpropyl)-N'-cyclohexylthioharnstoff

$(C_2H_5O)_3Si-(CH_2)_3-NH-CS-NH-C_6H_{11}$, 8:

Herstellung aus 199,3 g 2 (0,5 Mol) und 49,6 g Cyclohexylamin 0,5 Mol).
Ausbeute: 177,5 g entsprechend 97,9 % d. Th.; orangefarbene, hochviskose Flüssigkeit.

| $C_{16}H_{34}N_2O_3SSi$ (362, 609): | | | | |
|---|---|---|---|---|
| | C (%) | H (%) | N (%) | S (%) |
| ber.: | 53,00 | 9,45 | 7,73 | 8,84 |
| gef.: | 52,9 | 9,9 | 7,0 | 9,3 |

Beispiel 10: N-(3-Triethoxysilylpropyl)-N', N'-dibutylthioharnstoff

$(C_2H_5O)_3Si-(CH_2)_3-NH-CS-N(C_4H_9)_2$, 10:

Herstellung aus 199,3 g 2 (0,5 Mol) und 64,4 g Di-n-butylamin (0,5 Mol).
Ausbeute: 190,7 g entsprechend 97,1 % d. Th.; dunkelgelbe, viskose Flüssigkeit.

$C_{18}H_{40}N_2O_3SSi$ (392, 679):

| | C (%) | H (%) | N (%) | S (%) |
|---|---|---|---|---|
| ber.: | 55,06 | 10,27 | 7,13 | 8,16 |
| gef.: | 55,0 | 10,3 | 7,8 | 8,2 |

Beispiel 11: N-(3-Triethoxysilylpropyl)-N',N'-diallylthioharnstoff

$(C_2H_5O)_3Si-CH_2-CH_2-CH_2-NH-CS-N(CH_2-CH=CH_2)_2$, 11:

Herstellung aus 199,3 g 2 (0,5 Mol) und 48,6 g Diallylamin (0,5 Mol).
Ausbeute: 170,9 g entsprechend 94,8 % d. ,Th.; orangefarbene Flüssigkeit.

| $C_{16}H_{32}N_2O_3SSi$ (360, 593): | | | | |
|---|---|---|---|---|
| | C (%) | H (%) | N (%) | S (%) |
| ber.: | 53,30 | 8,95 | 7,77 | 8,89 |
| gef.: | 52,6 | 8,5 | 8,1 | 8,8 |

Das $^1$H-NMR-Spektrum von 11 ist in Abbildung 2 wiedergegeben.

Beispiel 12: N-(3-Triethoxysilylpropyl)-N',N'-bis(3-triethoxysilylpropyl)thioharnstoff

$(C_2H_5O)_3Si\text{-}(CH_2)_3\text{-}NH\text{-}CS\text{-}N((CH_2)_3Si(OC_2H_5)_3)_2$, 12:

Herstellung aus 99,7 g 2 (0,25 Mol) und 106,4 g Bis(3-triethoxysilylpropyl)amin (0,25 Mol). Ausbeute: 169,7 g entsprechend 98,5 % d. Th.; gelbbraune Flüssigkeit.

| $C_{28}H_{64}N_2O_9SSi_3$ (689, 147): | | | | |
|---|---|---|---|---|
| | C (%) | H (%) | N (%) | S (%) |
| ber.: | 48,80 | 9,36 | 4,07 | 4,65 |
| gef.: | 48,5 | 10,1 | 4,6 | 4,3 |

IV. N,N-Bis(3-trialkoxysilylpropyl)-N'-alkyl-thioharnstoffe (Beispiel 13):

Beispiel 13: N,N-Bis(3-triethoxysilylpropyl)-N'-octylthioharnstoff

$((C_2H_5O)_3Si\text{-}(CH_2)_3)_2\ N\text{-}CS\text{-}NH\text{-}C_8H_{17}$, 13:

Eine Mischung aus 87,0 g des Natriumcarbamats 4 (0,17 Mol) und 21,5 g n-Octylamin (0,17 Mol) werden unter Rühren für 3 h auf 150 °C erwärmt und nach dem Abkühlen auf Raumtemperatur mit 250 ml Aceton versetzt. Vom ausgefallenen, gelblichen Niederschlag (9,1 g entsprechend 97,4 % der erwarteten Menge) wird abfiltriert. Nach dem Abziehen des Lösungsmittels im Vakuum werden 94,9 g einer orangefarbenen, hochviskosen Flüssigkeit isoliert entsprechend 94,3 % d. Th.

| $C_{27}H_{60}N_2O_6SSi_2$ (597, 002): | | | | |
|---|---|---|---|---|
| | C (%) | H (%) | N (%) | S (%) |
| ber.: | 53,32 | 10,13 | 4,69 | 5,37 |
| gef.: | 52,6 | 10,6 | 4,3 | 4,9 |

V. N,N-Bis(3-trialkoxysilylpropyl)-N',N'-dialkyl-thioharnstoffe (Beispiele 14, 15):

Beispiel 14: N,N-Bis(3-triethoxysilylpropyl)-N',N'-dibutyl-thioharnstoff

$((C_2H_5O)_3Si\text{-}(CH_2)_3)_2\ N\text{-}CS\text{-}N(C_4H_9)_2$, 14:

Eine Mischung aus 87,0 g des Natriumdithiocarbamats 4 (0,17 Mol) und 64,6 g Di-n-butylamin (0,5 Mol, Überschuß) werden für 4 h auf 160 °C bis zum beginnenden Rückfluß des Amineinsatzstoffes unter Rühren erhitzt. Anschließend wird überschüssiges Amin abdestilliert und der hochviskose Rückstand mit 300 ml Aceton versetzt. Nach dem Abfiltrieren des dabei ausgefallenen Niederschlags (8,9 g entsprechend 95,6 % d. Th.) und dem Abziehen des Lösungsmittels im Vakuum werden 11,7 g einer hochviskosen, gelbbraunen Flüssigkeit erhalten (entsprechend 92,5 % d. Th.).

| $C_{27}H_{60}N_2O_6SSi_2$ (597, 022): | | | | |
|---|---|---|---|---|
| | C (%) | H (%) | N (%) | S (%) |
| ber.:<br>gef.: | 54,32<br>53,4 | 10,13<br>10,0 | 4,69<br>4,1 | 5,37<br>4,9 |

<u>Beispiel 15:</u> Tetra-(3-triethoxysilylpropyl)thioharnstoff

$((C_2H_5O)_3Si\text{-}(CH_2)_3)_2$ N-CS-N $((CH_2)_3\text{-}Si(OC_2H_5)_3)_2$, <u>15</u>:

Eine Mischung aus 87,0 g des Natriumdithiocarbamats <u>4</u> (0,17 Mol) und 85,1 g Bis(3-triethoxysilylpropyl)-amin (0,2 Mol, Überschuß) werden für 6 h unter Rühren aus 140 °C erwärmt. Überschüssiges Amin wird anschließend im Hochvakuum abdestilliert. Der hochviskose Rückstand wird anschließend mit 450 ml Aceton versetzt. Nach dem Abfiltrieren des Niederschlages (9,1 g entsprechend 97,8 % d. Th.) und dem Abziehen des Lösungsmittels werden 136,9 g einer honigartig viskosen, rotbraunen Flüssigkeit erhalten (entsprechend 92,3 % der erwarteten Menge).

| $C_{37}H_{84}N_2O_{12}SSi_4$ (893, 489): | | | | |
|---|---|---|---|---|
| | C (%) | H (%) | N (%) | S (%) |
| ber.:<br>gef.: | 49,74<br>48,9 | 9,48<br>9,9 | 3,14<br>2,9 | 3,59<br>3,1 |

**Patentansprüche**

**1.** Verfahren zur Herstellung von N bzw. N' ein- oder mehrfach substituierten organyloxysilylfunktionellen Thioharnstoffen,
dadurch gekennzeichnet,
daß man
a) ein Aminoalkylsilan der allgemeinen Formel (I)

$$(RO)_{3-b}\overset{(CH_3)_b}{\overset{|}{Si}}-(CHX)_a-NHR^1 ,$$

in der bedeuten

b: 0; 1 oder 2
R: Alkyl mit 1 bis 6 C-Atomen, Cycloalkyl mit 5 bis 7 C-Atomen, Aryl
X: Wasserstoff, wenn a = 1, 3, 4, 5 oder 6,
$R^1$: Wasserstoff,

$$-(CH_2)_3\ -\overset{(CH_3)_b}{\overset{|}{Si}}-(OR)_{3-b}$$

in einem organischen Lösungsmittel mit Kohlenstoffdisulfid in Gegenwart eines tertiären Amins (A) oder Alkalialkoholats (MOR) umsetzt,

b) das dabei gebildete Dithiocarbanat der allgemeinen Formel (II)

$$(RO)_{3-b}\overset{(CH_3)_b}{\overset{|}{Si}} - (CHX)_a - NR^1 - CS - S^{e}AH^{\oplus} / M^{\oplus}$$

isoliert und mit mindestens der äquimolaren Menge eines Amins der allgemeinen Formel (III)

$HN'R^2R^3$ versetzt,

in der bedeuten

$R^2$, $R^3$: unabhängig voneinander Wasserstoff, Alkyl mit 1 bis 8 C-Atomen, Alkenyl mit 2 bis 8 C-Atomen, Aryl, Aralkyl,

$$-(CH_2)_3 - \underset{(CH_3)_b}{\underset{|}{Si}}(OR)_{3-b},$$

$R^2$ und $R^3$ aber nicht gleichzeitig Wasserstoff sein können, dieses Gemisch erhitzt, bis die Reaktion abgeschlossen ist, und das entstandene Produkt der allgemeinen Formel (IV)

$$(RO)_{3-b}\overset{(CH_3)_b}{\overset{|}{Si}} - (CHX)_a - NR^1 - CS - NR^2R^3$$

anschließend mit an sich bekannten Methoden isoliert.

**2.** N, N, N'; N, N', N' und N, N, N', N' - substituierte Thioharnstoffe der allgemeinen Formel (IV)

$$(RO)_{3-b}\overset{(CH_3)_b}{\overset{|}{Si}} - (CHX)_a - NR^1 - CS - NR^2R^3,$$

in der a, b, X, R, $R^1$, $R^2$ und $R^3$ die obengenannten Bedeutungen haben, mit Ausnahme der Fälle, in denen $R^1$ und $R^2$ oder $R^3$ Wasserstoff entsprechen.

## Claims

**1.** Process for the production of N- or N'- mono- or higher-substituted organyloxysilyl-functional thioureas, characterised in that

a) an aminoalkylsilane of the general formula (I)

$$(RO)_{3-b}\overset{(CH_3)_b}{\overset{|}{Si}}-(CHX)_a-NHR^1,$$

wherein

- b denotes 0, 1 or 2,
- R denotes alkyl with 1 to 6 C atoms, cycloalkyl with 5 to 7 C atoms or aryl,
- X denotes hydrogen, if a = 1, 3, 4, 5 or 6,
- $R^1$ denotes hydrogen or

$$-(CH_2)_3-\overset{(CH_3)_b}{\overset{|}{Si}}-(OR)_{3-b}\ ,$$

is reacted in an organic solvent with carbon disulphide in presence of a tertiary amine (A) or an alkali metal alcoholate (MOR),

b) the dithiocarbamate then formed, of the general formula (II)

$$(RO)_{3-b}\overset{(CH_3)_b}{\overset{|}{Si}}-(CHX)_a-NR^1-CS-S^{\ominus}AH^{\oplus}/\ M^{\oplus},$$

is isolated and mixed with at least the equimolar amount of an amine of the general formula (III)

$HN'R^2R^3$

wherein

$R^2$, $R^3$ independently of each other denote hydrogen, alkyl with 1 to 8 C atoms, alkenyl with 2 to 8 C atoms, aryl, aralkyl, or

$$-(CH_2)_3-\underset{(CH_3)_b}{\underset{|}{Si}}-(OR)_{3-b}\ ,$$

but $R^2$ and $R^3$ cannot simultaneously be hydrogen,

this mixture is heated until the reaction is terminated and the product formed, of the general formula (IV)

$$(RO)_{3-b}\overset{(CH_3)_b}{\overset{|}{Si}}-(CHX)_a-NR^1-CS-N'R^2R^3,$$

is thereafter isolated by methods known per se.

**2.** N,N,N'-, N,N',N'- and N,N,N',N'-substituted thioureas of the general formula (IV)

$$(RO)_{3-b}\overset{(CH_3)_b}{\overset{|}{Si}}-(CHX)_a-NR^1-CS-N'R^2R^3,$$

in which a, b, X, R, $R^1$, $R^2$ and $R^3$ have the above-mentioned meanings, with the exception of the cases in which $R^1$ and $R^2$ or $R^3$ correspond to hydrogen.

## Revendications

**1.** Procédé de préparation de thiourées N- ou N'- mono ou polysubstituées à fonction organyloxysilyle, caractérisé en ce que :

a) on fait réagir un aminoalkylsilane de formule générale :

$$(RO)_{3-b}\,\overset{\displaystyle (CH_3)_b}{\overset{|}{Si}}-(CHX)_a - NHR^1$$

dans laquelle :

b : représente 0 ;1 ou 2,

R : représente un alkyle de 1 à 6 atomes de C, un cycloalkyle de 5 à 7 atomes de C, un aryle,

X : est l'hydrogène, quand a = 1,3,4,5 ou 6

$R^1$ est l'hydrogène,

$$-(CH_2)_3 - \overset{\displaystyle (CH_3)_b}{\overset{|}{Si}}\ (OR)_{3-b}$$

dans un solvant organique avec du disulfure de carbone en présence d'une amine tertiaire (A) ou d'un alcoolate d'alcali (MOR),

b) on isole le dithiocarbamate de formule générale (II) ainsi formé :

$$(RO)_{3-b}\,\overset{\displaystyle (CH_3)_b}{\overset{|}{Si}} - (CHX)_a - NR^1 - CS - S^{\ominus}\ AH^{\oplus}/M^{\oplus}$$

et on ajoute une quantité au moins équimolaire d'une amine de formule générale (III) :

$HN'R^2R^3$

dans laquelle :

$R^2$,$R^3$ : représentent indépendamment l'un de l'autre l'hydrogène,
un alkyle de 1 à 8 atomes de C,
un alcényle de 2 à 8 atomes de C,
un aryle,
un aralkyle,

$$-(CH_2)_3 - \underset{\displaystyle (CH_3)_b}{\underset{|}{Si}}\ (OR)_{3-b}$$

mais $R^2$ et $R^3$ ne peuvent pas être simultanément l'hydrogène, on chauffe ce mélange, jusqu'à ce que la réaction soit complète, et on isole par les procédés connus le produit formé de formule générale IV :

$$(RO)_{3-b}\overset{\overset{(CH_3)_b}{|}}{Si} - (CHX)_a - NR^1 - CS - N'R^2R^3$$

**2.** N,N,N' ; N,N',N' et N,N;N',N' thiourées substituées de formule générale (IV)

$$(RO)_{3-b}\overset{\overset{(CH_3)_b}{|}}{Si} - (CHX)_a - NR^1 - CS - N'R^2R^3$$

dans laquelle a, b, X, R, $R^1$ et $R^3$ ont les significations données ci-dessus, à l'exception des cas dans lesquels R' et $R^2$ ou $R^3$ correspondent à l'hydrogène.

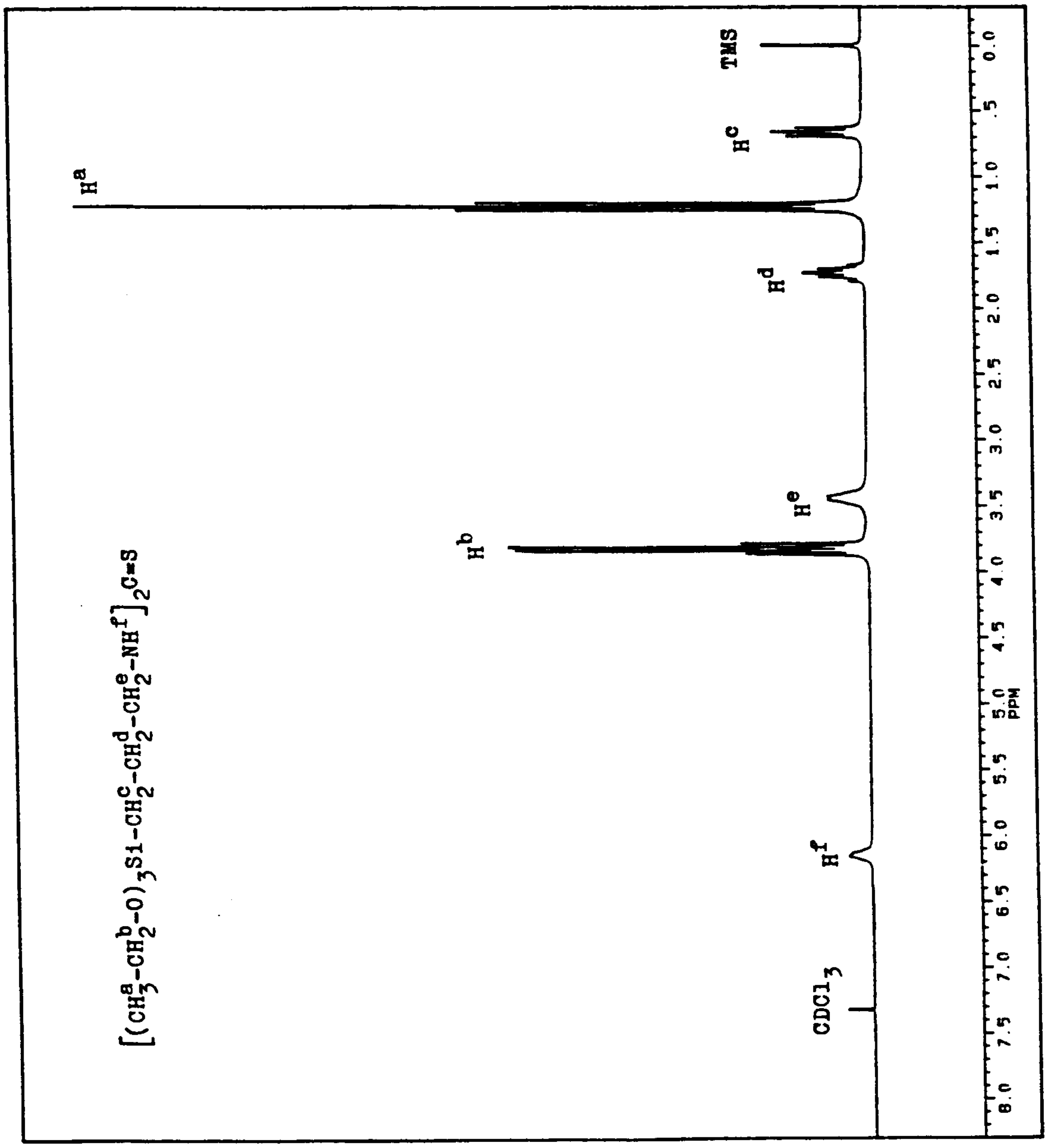


Abb. 1: $^1$H-NMR-Spektrum (250 MHz) von 5

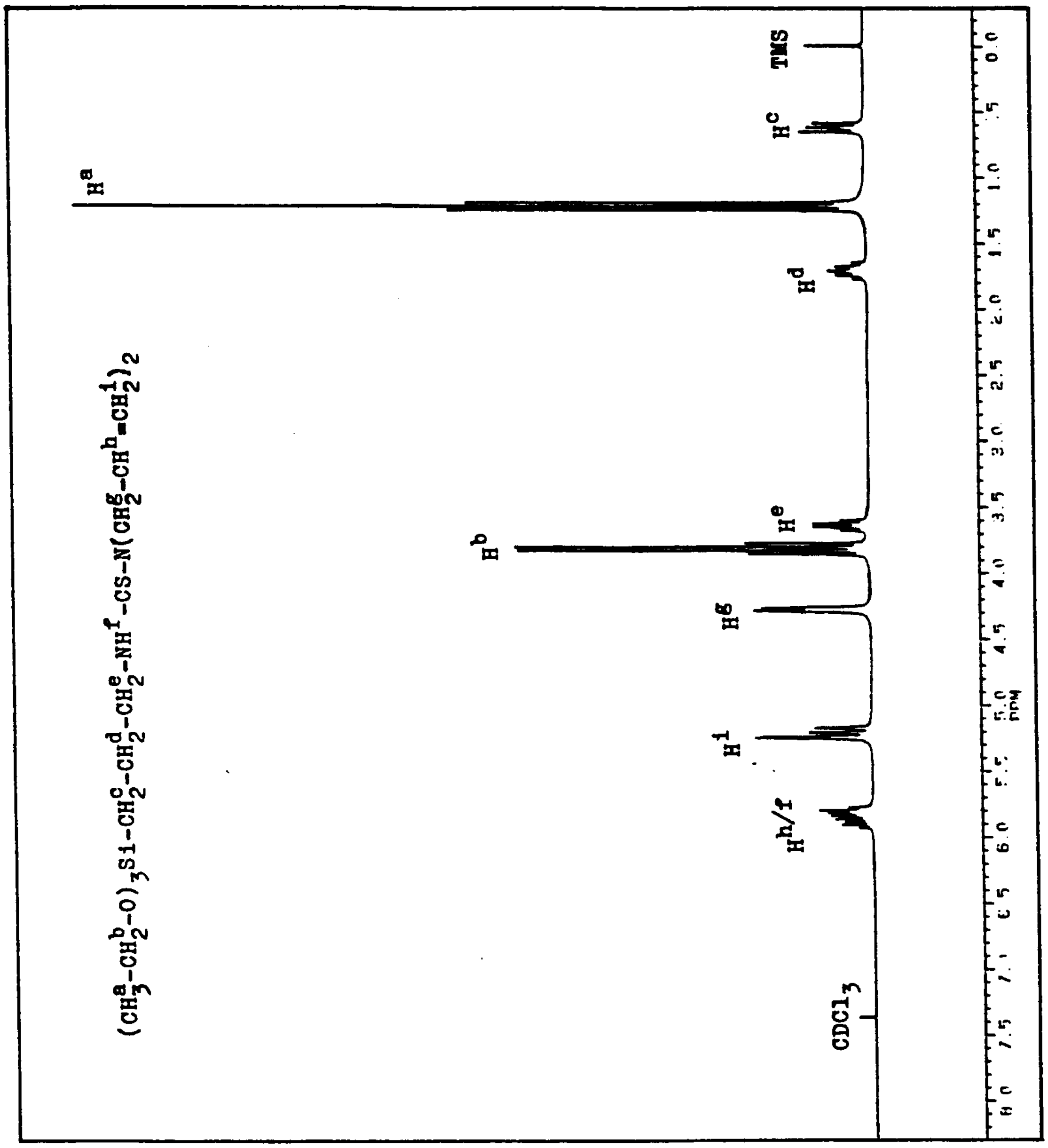

Abb.2: $^{1}$H-NMR-Spektrum (250 MHz) von <u>11</u>